# EUROPEAN PATENT APPLICATION

(11) **EP 1 701 073 A1**
(43) Date of publication of application: **13.09.2006**
(21) Application number: 05251433.8
(22) Date of filing: 09.03.2005
(51) Int. Cl.: F16K 15/04

(54) **Valve arrangement**

(71) Applicant: Delphi Technologies, Inc., Troy, MI 48007 (US)
(72) Inventor: Rogers, Paul, c/o Delphi Diesel System, Gillingham Kent, ME8 0RU (GB); Moore, Matthew, c/o Delphi Diesel System, Gillingham Kent, ME8 0RU (GB)
(74) Representative: Hopley, Joanne Selina

(57) **Abstract**

A valve arrangement (1) for controlling a flow of fluid has a ball valve member (7) which is engageable with a valve seating region (6) to control fluid flow through a passage (4) having an internal wall (5), and biasing means (8) for urging the ball valve member (7) into engagement with the valve seating region (6). The internal wall (5) serves to guide movement of the ball valve member (7) in circumstances in which it is urged away from the valve seating region (6) against the biasing means (8), and the valve arrangement (1) includes means (9, 10, 11) for permitting fluid to exit the valve arrangement (1) in such circumstances.

## Description

The present invention relates to a valve arrangement for controlling a flow of fluid. In particular, but not exclusively, the invention relates to a ball valve arrangement for controlling a flow of fuel in the fuel injection system of an internal combustion engine, particularly a diesel engine.

It is known to use ball valves as pressure control devices for fluid systems. This has been accomplished for many years by simply using a ball which is urged into engagement with a conical seat by a pre-loaded coil spring so as to close an inlet to the valve. When a sufficient pressure difference exists across the ball, acting in a direction opposite to the biasing force of the spring, the ball lifts from the seat allowing fluid to flow through the valve until the pressure difference decays to its closing value. Thereafter the ball is returned to its seat by the spring and the fluid flow is stopped.

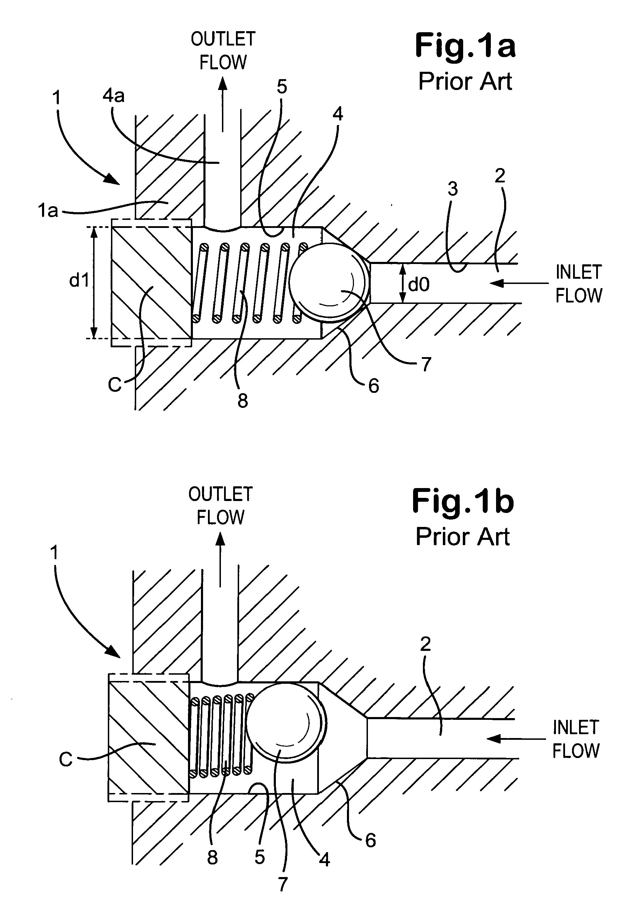

Such ball valves have been used previously in high pressure fuel injection systems for internal combustion engines. In particular, the use of such valves as fuel control valves in high pressure fuel pumps is well known. Previously, however, the use of ball valves in common rail diesel pump applications has resulted in a series of failures. The ball locates within a high pressure flow passage for diesel fuel which is defined within a valve housing. It is thought that valve failures arise due to the ball impacting the wall of the passage at high speed as the valve is caused to open, leading to damage and/or wear of the valve parts. Further motion of the ball around the internal passage wall also occurs, increasing the damage caused. This effect has been proved to a large extent by the use of large scale modelling performed by the inventors where an acrylic model has allowed visual access to better understand motion of the ball. Figures 1a and 1b illustrate a known ball valve arrangement in closed (Figure 1a) and open (Figure 1b) conditions.

It is possible to counter failures of the aforementioned type by the use of guided conical valves, as opposed to ball valves. However, guided conical valves are expensive to manufacture due to the need for several parts which all need to be close fitting and concentric. In addition, high rates of wear around the sealing annulus where the valve makes contact with its seat can lead to the valve jamming shut if there are inaccuracies in the seat and/or cone angles. A conical valve also has a higher moment of inertia than a ball valve which, for some applications, can lead to problems with the valve not accelerating quickly enough when it is opening, thus giving an insufficient valve response.

The present invention seeks to overcome or alleviate the problems associated with ball valves of the aforementioned type.

According to the present invention, there is provided a valve arrangement for controlling or regulating a flow of fluid, including a ball valve member which is engageable with a valve seating region to control fluid flow through a passage having an internal wall, and biasing means for urging the ball valve member into engagement with the valve seating region. The internal wall of the passage is arranged so as to guide movement of the ball valve member in circumstances in which it is urged away from the valve seating region against the biasing means. The valve arrangement further includes means for permitting fluid to exit the valve arrangement in such circumstances.

The ball valve arrangement of the present invention thus provides the advantage that movement of the ball is guided as it is urged away from its seating to open the valve arrangement. Problems in conventional ball valves, in which the ball and/or passage wall become damaged due to the ball impacting the wall on opening, are therefore avoided. As a consequence, valve life is prolonged. A particular benefit is obtained when the ball valve arrangement is employed within a high pressure fuel injection system, where the hydraulic fuel pressures are particularly high and the ball valve are subjected to large forces.

It is preferable for the internal wall to include guide regions which serve to guide sliding movement of the ball valve member within the passage. Preferably, the guide regions define a close clearance with an outer surface of the ball valve member so that substantially no flow is able to exit the valve arrangement through the close clearance.

It is an important feature of the invention, therefore, that suitable means is provided to allow fluid to exit the valve arrangement when the ball is unseated, as flow past the unseated ball is otherwise blocked through the close clearance. Advantageously, the means for permitting fluid to exit the valve arrangement comprises at least one axial flow path in fluid communication with the passage.

Preferably, the valve arrangement comprises a plurality of axial flow paths arranged at equi-angularly spaced locations around an outer periphery of the passage so that adjacent ones of the axial flow paths are spaced from one another by a respective one of the guide regions.

In one embodiment, at least a region of each flow path is aligned in parallel with the passage. For example, each of the axial flow paths may be aligned in parallel with the passage along its entire length so that each of the axial flow paths itself defines an exit flow path from the valve arrangement.

Alternatively, the guide regions may be arranged to terminate part way along the length of the passage so that the axial flow paths merge to define a common exit flow path from the valve arrangement. This may be advantageous in that there is no requirement for additional drillings to be provided through the valve housing to permit the outlet flow to leave the valve arrangement.

The means for permitting fluid to exit the valve arrangement may further include at least one exit flow path which extends generally radially outward from the passage.

The at least one axial flow path may be further defined by a groove or recess provided on an outer surface of the ball valve member. This may be beneficial if a larger outlet flow area is required past the ball valve member.

Preferably, the valve arrangement comprises an inlet passage having an internal wall of a diameter less than a diameter of the internal wall of the passage, the inlet passage being in communication with the passage due to flow past the valve seating region in circumstances in which the ball valve member is disengaged from the valve seating region. Conveniently, the valve seating region is a frusto-conical seating surface. Advantageously, the biasing means comprises a spring, typically a coil or helical spring.

In order that the present invention may be more readily understood, it is described with reference to the following drawings, in which:
- FIGURE 1a: is a side cross-sectional view of a prior art ball valve arrangement in a first condition;
- FIGURE 1b: is a side cross-sectional view of the prior art ball valve arrangement of Figure 1a in a second condition;
- FIGURE 2: is an end cross-sectional view of an outlet passage of a first embodiment of a valve arrangement according to the present invention;
- FIGURE 3a: is a simplified side cross-sectional view of the ball valve arrangement in Figure 2 when in a first, closed condition;
- FIGURE 3b: is a simplified side cross-sectional view of the ball valve arrangement in Figure 3a when in a second, open condition;
- FIGURES 4a and 4b: are enlarged schematic views of parts of the ball valve arrangement in Figures 3a and 3b;
- FIGURE 4c: is a schematic view of a part of a faulty ball valve arrangement, by way of comparison with Figure 4b; and
- FIGURE 5: is an alternative embodiment of a ball valve arrangement according to the present invention.

In order to better understand the advantages of the present invention, there now follows a detailed description of the prior art valve arrangement and its associated problems.

Referring to Figures 1a and 1b, the valve arrangement 1 includes an inlet passage 2 having an inner wall 3 of diameter d0, the inlet passage 2 being defined by a first bore or drilling provided in a valve housing 1a. The valve arrangement 1 also includes an outlet passage 4 having an inner wall 5 of diameter d1, the outlet passage 4 being defined by a second bore or drilling provided in the valve housing 1a. The diameter d0 of the internal wall 3 of the inlet passage 2 is less than the diameter d1 of the internal wall 5 of the outlet passage 4. An outlet end of the inlet passage 2 communicates with a facing end of the outlet passage 4 via an intermediate bore region located between the two. The intermediate bore region defines a valve seating region 6 of the valve arrangement 1, the seating region taking the form of a frusto-conical seating surface.

A valve member in the form of a ball 7 is located in the outlet passage 4 and is urged into engagement with the valve seating region 6 by a biasing member in the form of a helical spring 8. The outlet passage 4 extends along a central axis of the valve arrangement 1 and communicates with an exit flow path 4a which deviates radially from the central axis to define an outlet flow path for fuel when the valve arrangement 1 is open.

When the pressure of fluid within the inlet passage 2 reaches a sufficient level, the biasing force exerted by the spring 8, acting in combination with any hydraulic force in the outlet passage 4, is overcome, and the ball 7 is urged away from the valve seating region 6. As the ball 7 is urged to open, fluid is able to flow through the inlet passage 2, past the unseated ball 7, into the outlet passage 4 and out through the exit flow path 4a thereof.

The ball 7 will remain open until the biasing force of the spring 8, acting in combination with hydraulic pressure in the outlet passage 4, can overcome the pressure of the fluid on the inlet side of the ball 7, whereupon the ball 7 will be forced into seated engagement with the valve seating region 6 so as to close the valve arrangement 1.

A problem encountered with this type of valve arrangement, however, is that the ball 7 may be forced off-axis to the fluid flow direction, resulting in the ball 7 impacting, and rolling around, the wall 5 of the outlet passage 4, thus causing damage to the ball 7 and/or the wall 5.

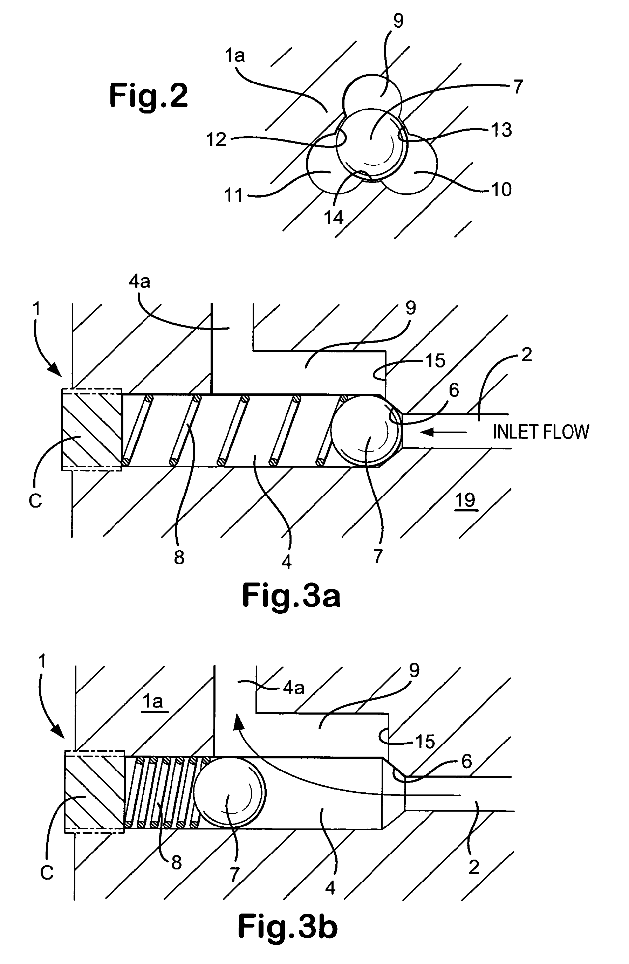

With reference to Figures 2, 3a and 3b, a first embodiment of the invention which addresses this problem will now be described. Certain parts are common between the above described prior art example and the present embodiment, and like parts will be given the same reference numerals.

As best seen from the end view of Figure 2, in addition to the outlet passage 4, a plurality of bores are provided through the housing 1a around the outlet passage periphery. The bores are arranged so as to be substantially parallel to, and in fluid communication with, the outlet passage 4 along its axial length. The bores define first, second and third axial flow paths, 9, 10 and 11 respectively, through which fluid can flow when the ball 7 is unseated, in use. The axial flow paths 9, 10, 11 are arranged at equi-angularly spaced locations around the outlet passage periphery, each flow path being isolated from its neighbouring flow paths by virtue of regions 12, 13, 14 of the outlet passage wall 5 of diameter d1.

In the regions 12, 13, 14 of the outlet passage wall, the diameter d1 of the passage 4 is chosen to be only slightly larger than the diameter d2 of the ball 7. For example, the close clearance defined between the outer diameter of the ball 7 and the internal diameter d1 of the passage 4 in a wall region 12, 13, 14 may have a maximum value of around 0.5 mm. The regions 12, 13, 14 of the wall 5 therefore act as guide regions for the ball 7 as it is caused to move away from the valve seating 6, in use. Furthermore, as the respective diameters d1, d2 of the outlet passage 4 and the ball 7 are matched in the guide regions 12, 13, 14, substantially no flow is able to exit the valve arrangement 1 through the close clearances, even when the ball 7 is unseated.

It is because substantially no fluid is able to flow through the close clearances between the ball's outer surface and the guide regions 12, 13, 14 of the outlet passage wall 5, that it is necessary to provide the valve arrangement 1 with a means for permitting fluid to exit the valve arrangement 1 when the ball is unseated. In this embodiment, the means for permitting fluid to exit the open valve arrangement 1 is provided by the axial flow paths 9, 10, 11 through the housing 1a.

Figures 3a and 3b illustrate the valve arrangement 1 in side cross section and thus show only one of the axial flow paths 9. At its outlet end, remote from the ball 7, the flow path 9 communicates with a radially extending exit flow path 4a defined by a drilling through the housing 1a. In use, fluid flowing past the unseated ball 7, into the flow path 9 and into the outlet passage 4 is able to exit the valve arrangement 1 through the exit flow path 4a. Similar exit flow paths (not shown) are provided for each of the other axial flow paths 10, 11. At some point downstream (also not shown), the radial exit flow paths for each of the axial flow paths 9, 10, 11 are arranged to merge into a common valve outlet.

The flow path 9 extends parallel to, and is in communication with, the outlet passage 4 up to an end wall 15 of the path 9. In the illustrated embodiment, this end wall 15 is located at a pre-determined point along the valve seating region 6, that is, just after the point at which the internal diameter d1 of the outlet passage 4 starts to reduce to define the frusto-conical valve seating region 6. The ball 7 is received within the outlet passage 4 and is urged into engagement with the valve seating region 6 by means of the spring 8, as in the known ball valve arrangement of Figure 1.

As shown in Figure 3b in particular, when fluid pressure on the inlet side of the ball 7 reaches a sufficient level, the biasing force of the spring 8 is overcome and the ball 7 is urged away from the valve seating region 6. The guidance of the ball by the guide regions 12, 13, 14 ensures ball movement is aligned with the direction of flow into the outlet passage 4 (as shown in Figure 3b) and prevents the ball 7 moving off-axis. As the ball 7 is urged open, fluid is able to flow past the unseated ball 7, through the axial flow paths 9, 10, 11 and through the radial exit paths 4a into the common valve outlet. The ball 7 will remain open until the biasing force of the spring 8, (acting in combination with any hydraulic pressure in the outlet passage 4) is sufficient to overcome the incoming fluid pressure so as to once again seat the ball 7 on the valve seating region, thereby closing the valve arrangement 1.

The present invention provides the advantage that, when the ball 7 is urged open, ball impact with the outlet passage wall 5 is avoided by virtue of ball movement being guided. The valve arrangement 1 is of particular benefit when employed in a high pressure pump of a fuel injection system of an internal combustion engine; for example, in a diesel engine. This is because the amount of wear on the ball in a conventional ball valve arrangement, such as that illustrated in Figures 1a and 1b, is especially significant in such high pressure applications, as the high flow rate of fuel through the open valve results in a particularly forceful ball-to-wall impact.

The provision of the axial flow paths 9, 10, 11 is particularly important as this ensures a means is provided to allow fluid to exit the valve arrangement 1, even though flow past the guide regions 12, 13, 14 is not possible. Other configurations for the flow paths 9, 10, 11 are possible, however, whilst still providing this important function. For example, grooves, recesses or flats, as opposed to drilled or bored axial paths, may be provided in the housing 1a. In addition, the ball 7 itself may be modified to include grooves, recess or flats, whilst maintaining a predominantly ball-like shape. For the purpose of this specification, therefore, it will be appreciated that references to a "ball" should be taken to include a ball modified to include any of the aforementioned features for the purpose of defining a flow path for fluid to exit the valve when the ball 7 is unseated.

In the aforementioned embodiment, each flow path 9, 10, 11 extends only part-way along the length of the outlet passage 4 (as shown in Figure 3a), prior to its point of communication with the respective exit flow path 4a. In an alternative embodiment, the flow paths 9,10,11 may be arranged to extend further along the length of the outlet passage 4, for example along its entire length. In this case, each of the flow paths 9, 10, 11 itself may exit the housing 1a to allow the outlet flow through the passage 4 to leave the valve arrangement 1. Alternatively, the abutment piece C for the spring 8 may be provided with appropriate channels or grooves to allow the fluid flow in the passage 4 to exit the valve arrangement 1.

Alternatively, it may be particularly convenient to terminate the guide regions 12, 13, 14 part way along the lengths of the flow paths 9, 10, 11 so that the fluid flows through the paths 9, 10, 11 eventually merge together within the outlet passage 4. A common exit path 4a may then be provided by a single, radial (or other orientation) drilling which communicates with the outlet passage 4 at one end and exits the housing 1a at the other. In practice, this embodiment may be preferred as it avoids the requirement to drill three separate exit paths through the housing 1a.

In a further alternative embodiment, the location of the end wall 15 may be moved to a position further downstream in the outlet passage 4, spaced away from the region at which the internal diameter d1 of the outlet passage 4 meets the frusto-conical valve seating region 6. It is to be appreciated, however, that in this case no fluid will be able to past the ball 7 until the ball 7 has opened sufficiently to clear the point at which the flow paths 9, 10, 11 meet the outlet passage 4.

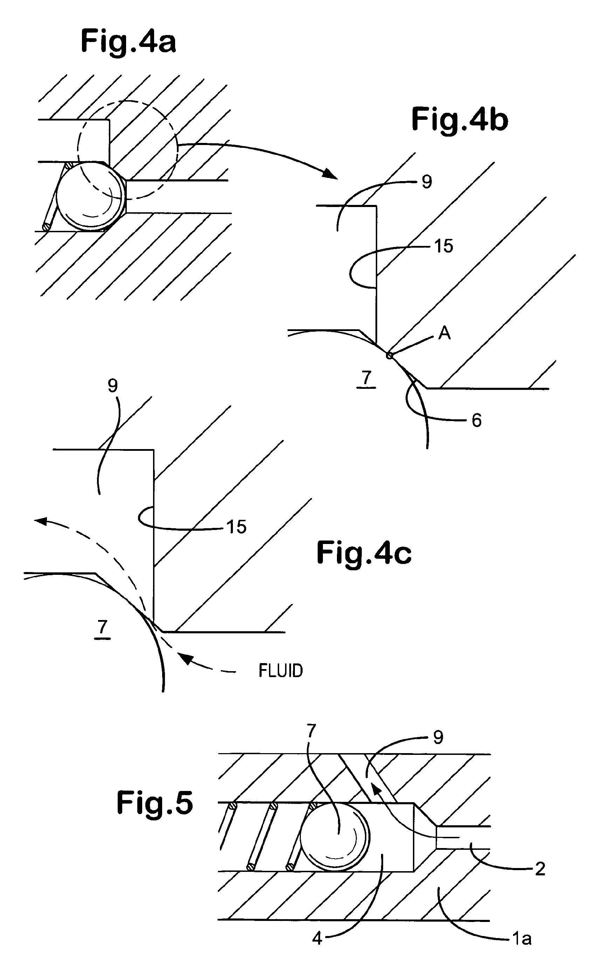

In another alternative embodiment, the end wall 15 may be moved further upstream towards the inlet passage 2. The position of the end wall 15 must always be chosen, however, such that the seal between the inlet passage 2 and the outlet passage 4 is not compromised when the ball 7 is seated against the valve seating region 6. The potential problem created by moving the end wall 15 too close to where the valve seating region 6 meets the inlet passage 2 is described with reference to Figures 4a to 4c. Figures 4a and 4b illustrate a correctly functioning valve arrangement, in which an annular sealing line A is provided by the ball 7 being in engagement (by virtue of the biasing force of the spring 8) with the valve seating region 6. If the flow path 9 extends too close to the inlet passage 2 (i.e. if the end wall 15 is too close to the inlet passage 2), the annular seal will be ineffective and will allow fluid to pass even when the ball 7 is seated, as illustrated in Figure 4c. The flow paths 9,10,11 must therefore always be formed so as to terminate short of the sealing line A.

Although a valve arrangement with three flow paths 9, 10, 11 has been described, valve arrangements employing a lesser or greater number of flow paths, for example a single flow path, could be used. All that is required is for adequate guidance to be provided by the guide regions of the wall 5 as the ball 7 is urged to open.

As shown in Figure 5, in a further alternative embodiment the means for permitting fluid to exit the open valve arrangement 1 is provided by an exit flow path 9 through the housing 1a. The exit flow path 9 is arranged to communicate with the outlet passage 4 at an inlet opening 16 of the flow path 9, with the flow path 9 extending at an angle to the axis of the outlet passage 4. In a variation (not shown), a plurality of such exit flow paths may be provided

## Claims

1. A valve arrangement (1) for controlling a flow of fluid, the valve arrangement comprising:
a ball valve member (7) which is engageable with a valve seating region (6) to control fluid flow through a passage (4) having an internal wall (5), and
biasing means (8) for urging the ball valve member (7) into engagement with the valve seating region (6),
**characterised in that** the internal wall (5) serves to guide movement of the ball valve member (7) in circumstances in which it is urged away from the valve seating region (6) against the biasing means (8), the valve arrangement (1) including means (9, 10, 11) for permitting fluid to exit the valve arrangement (1) in such circumstances.

2. A valve arrangement (1) according to claim 1, wherein the internal wall (5) includes a plurality of guide regions (12, 13, 14) which serve to guide sliding movement of the ball valve member (7) within the passage (4).

3. A valve arrangement (1) according to claim 2, wherein each of the guide regions (12, 13, 14) defines a close clearance with an outer surface of the ball valve member (7) so that substantially no flow is able to exit the valve arrangement (1) through the close clearance.

4. A valve arrangement (1) according to claim 2 or claim 3, wherein the means for permitting fluid to exit the valve arrangement (1) comprises at least one axial flow path (9, 10, 11) in fluid communication with the passage (4).

5. A valve arrangement (1) according to claim 4, wherein the valve arrangement (1) comprises a plurality of axial flow paths (9, 10, 11) arranged in parallel with the passage (4) and at equi-angularly spaced locations around an outer periphery of the passage (4) so that adjacent ones of the flow paths (9, 10, 11) are spaced from one another by a respective one of the guide regions (12, 13, 14).

6. A valve arrangement (1) according to claim 5, wherein each of the axial flow paths (9, 10, 11) is aligned in parallel with the passage (4) along its entire length so that each of the axial flow paths itself defines an exit flow path from the valve arrangement (1).

7. A valve arrangement (1) according to claim 5, wherein the guide regions (12, 13, 14) terminate part way along the length of the passage (4) so that the axial flow paths (9, 10, 11) merge to define a common exit flow path from the valve arrangement (1).

8. A valve arrangement (1) according to claim 4 or claim 5, wherein the at least one axial flow path is further defined by a groove or recess provided on an outer surface of the ball valve member (7).

9. A valve arrangement (1) according to any one of the preceding claims, wherein the means for permitting fluid to exit the valve arrangement (1) includes at least one exit flow path (4a; 9) which extends radially outward from the passage (4).

10. A valve arrangement (1) according to any one of the preceding claims, wherein the valve arrangement (1) comprises an inlet passage (2) having an internal wall (3) of a diameter (dO) which is less than a diameter (dl) of the internal wall (5) of the passage (4), the inlet passage (2) being in communication with the passage (4) due to flow past the valve seating region (6) in circumstances in which the ball valve member (7) is disengaged from the valve seating region (6).

11. A valve arrangement (1) according to any one of the preceding claims, wherein the valve seating region (6) is of frusto-conical form.
